# EUROPÄISCHE PATENTSCHRIFT

(11) **EP 0 569 820 B1**
(45) Veröffentlichungstag und Bekanntmachung des Hinweises auf die Patenterteilung: **06.03.1996**
(21) Anmeldenummer: 93107197.1
(22) Anmeldetag: 04.05.1993
(51) Int. Cl.: B60R 16/02

(54) **Kabelbaum für ein Kraftfahrzeug mit Kabelbaumsteckern**
Wire harness with connectors for a vehicle
Faisceau de câbles avec connecteurs pour véhicule

(30) Priorität: 13.05.1992 DE 4215743
(43) Veröffentlichungstag der Anmeldung: 18.11.1993
(73) Patentinhaber: DEERE & COMPANY, Moline, Illinois 61265 (US)
(72) Erfinder: Hauk, Klaus, W-6701 Altrip (DE)
(74) Vertreter: Feldmann, Bernhard

(56) Entgegenhaltungen:
- EP-A- 0 235 924
- EP-A- 0 334 343
- DE-A- 3 435 566
- DE-A- 3 535 382
- DE-A- 3 903 818
- US-A- 4 386 278

## Beschreibung

Die Erfindung betrifft einen Kabelbaum für ein Kraftfahrzeug mit wenigstens einem an der Fahrzeugkabine befestigbaren Kabinenkabelbaumstecker, dessen Pole elektrisch mit Stromabnehmern, Bedien- und Anzeigegeräten in der Fahrzeugkabine verbunden sind und mit wenigstens einem elektrisch mit dem Kabinenkabelbaumstecker verbindbaren weiteren Kabelbaumstecker, dessen Pole mit elektrischen Ausrüstungsteilen wenigstens einer Fahrzeugkomponente, beispielsweise Motor oder Getriebe, verbunden sind, wobei in das Gehäuse des Kabinenkabelbaumsteckers und/oder das Gehäuse des weiteren Kabelbaumsteckers wenigstens eine Sicherung integriert ist.

Es ist bekannt, Kabelbäume unterschiedlicher Fahrzeugkomponenten durch Kabelbaumstecker miteinander zu verbinden. Die Kabelbaumstecker sind dabei in der Regel als Koaxialstecker ausgebildet, die eine Vielzahl von Steckerelementen enthalten. Die Abdichtung der Koaxialstecker gegenüber den in einem Wellrohr geführten Kabelbündel ist wegen deren Durchmesserunterschiede relativ aufwendig. Ferner ist die Übertragung höherer Ströme wegen der relativ dünnen Steckerelemente schwierig. Ein weiterer Nachteil der bekannten Fahrzeugkabelbäume liegt in der relativ schlechten Zugänglichkeit der Hauptsicherungen, der Hochstromrelais und der Anschlüsse für eine Fremdstartvorrichtung.

Die DE-A-39 03 818 beschreibt einen Verbindungsblock, in den Kabelbäume eines Kraftfahrzeugs zusammenlaufen. Der Verbindungsblock soll für unterschiedliche Fahrzeugtypen anwendbar sein und weist zahlreiche Relais, Sicherungen und Verzweigungsschaltungen auf, die aus mehreren Busleitungen in einem Gehäuse bestehen. Dabei ist innerhalb eines Gehäuses ein Basisschaltkreis vorgesehen, der für unterschiedliche Fahrzeugtypen ausgelegt ist. In einem weiteren Gehäuse ist ein Optionalschaltkreisblock angeordnet, dessen Schaltkreise speziell für die einzelnen Fahrzeugmodelle ausgebildet sind. An den Optionalschaltkreisblock sind die Kabelbäume des Fahrzeuges angeschlossen. An ihn ist über Steckvorrichtungen der Basisschaltkreis anschließbar. Der beschriebene Verbindungsblock dient nicht der Trennung von Kabelbäumen, die den einzelnen Fahrzeugkomponenten, wie Kabine, Motor oder Getriebe zugeordnet sind. Er ist daher für landwirtschaftliche und andere Nutzfahrzeuge nicht uneingeschränkt geeignet.

Aus der EP-A-0 334 343 geht eine Kabelbaumsteckereinheit hervor, die bei einer Fahrzeuginstrumententafel Anwendung finden soll und im wesentlichen aus einer auf der Instrumententafel angeordneten Steckereinheit und einer fahrzeugrumpfseitigen Steckereinheit besteht. Die auf der Instrumententafel angeordnete Steckereinheit kann mit einer Vielzahl von Sicherungen und Relais bestückt sein, was zu einer Vereinfachung der Verdrahtung auf der Instrumententafel führen soll.

Die der Erfindung zugrunde liegende Aufgabe wird darin gesehen, einen Kabelbaum der eingangs genannten Art anzugeben, bei dem die genannten Probleme und Nachteile durch eine einfache und montagefreundliche Konstruktion überwunden werden.

Die Aufgabe wird ausgehend von dem Oberbegriff des Patentanspruches 1 durch dessen kennzeichnende Merkmale gelöst.

Demgemäß ist in das Gehäuse des Kabinenkabelbaumsteckers und/oder in das Gehäuse des weiteren Kabelbaumsteckers wenigstens eine Hauptsicherung und/oder ein Hochstromrelais sowie eine Anschlußmöglichkeit für eine Fremdstarteinrichtung integriert. Damit ist die Steckverbindung zwischen zwei oder mehr Kabelbäumen als Leistungsverzweigungszentrum ausgebildet.

Vorzugsweise ist in die Steckverbindung, die durch den Kabinenkabelbaumstecker und den weiteren Kabelbaumstecker gebildet wird, wenigstens eine Anschlußeinrichtung integriert, die als Pluspol zum wahlweisen Anschluß einer Fremdstarteinrichtung dient und elektrisch über wenigstens eine in der Steckverbindung integrierte Sicherung mit dem Pluspol der Fahrzeugbatterie in Verbindung steht. Dabei ist der Pluspol zweckmäßigerweise bolzenförmig ausgebildet.

Da die Steckverbindung an einem gut zugänglichen Ort des Fahrzeuges, beispielsweise unterhalb des Bodenbleches der Fahrzeugkabine eines Ackerschleppers, zwischen den Trittstufen angebracht werden kann, sind auch die Hauptsicherungen, gegebenenfalls die Hochstromrelais und vor allem der Pluspol für die Fremdstartvorrichtung leicht zugänglich.

Neben dem Pluspol kann auch ein Massepol in die durch den Kabinenkabelbaumstecker und den weiteren Kabelbaumstecker gebildete Steckverbindung integriert sein, so daß beide Anschlüsse für eine Fremdstartvorrichtung nahe beieinander liegen.

Die Anschlußeinrichtungen werden vorzugsweise so ausgelegt, daß sie neben ihrer Zweckbestimmung, als Anschluß für eine Fremdstartvorrichtung zu dienen, gleichzeitig als Befestigungselement für wenigstens einen der Kabelbaumstecker an dem Fahrzeugchassis oder an einem anderen Kabelbaumstecker verwendbar sind. Beispielsweise kann der Massepol eine Befestigungsschraube für die Befestigung des Kabinenkabelbaumstekkers an dem Fahrzeugchassis und der Pluspol eine Befestigungsschraube für die Befestigung eines weiteren Kabelbaumsteckers an dem Kabinenkabelbaumstecker ersetzen. Der mit jeweils einem Anschluß der Hauptsicherungen (beispielsweise für die Kabinenelektrik und die Motorelektrik) unmittelbar in Kontakt stehende Pluspol kann so ausgelegt sein, daß er neben seiner Fremstartfunktion, der Steckerbefestigung und der Übertragung des gesamten Stroms für die Kabine und des gesamten Stroms für den Motor auch der Befestigung der Hauptsicherungen dient. Der Massepol kann neben seiner Fremdstartfunktion auch der Steckerbefestigung dienen.

Vorzugsweise sind die miteinander zu verbindenden Kabelbaumstecker als flache Bauteile ausgebildet, die mit ihren flachen Seiten zusammensteckbar sind. Jeder Kabelbaumstecker kann dabei aus einem schalenförmig ausgebildeten Oberteil und einem schalenförmig ausgebildeten Unterteil bestehen, die mit ihren einander zugewandten umlaufenden Kanten labyrinthartig ineinandergreifen und durch Rastmittel miteinander verbindbar sind. Dies ermöglicht eine einfache Montage und eine spritzwasserdichte Ausführung.

Bei einem aus zwei Schalen bestehenden Kabelbaumstecker ist die Kabeldurchtrittsöffnung zweckmäßigerweise durch an jeder der Schalen angeformte, miteinander korrespondierende Zylinderhalbschalen gebildet. Innerhalb der Zylinderhalbschalen ist wenigstens eine umlaufende Nut vorgesehen, in die ein Dichtelement zum Abdichten der Kabeldurchtrittsöffnung oder ein Befestigungselement einlegbar ist.

Das Leistungsverzweigungszentrum ist gemäß einer bevorzugten Ausgestaltung der Erfindung in erster Linie die Haupttrennstelle zwischen Kabine einerseits und Motor und Getriebe andererseits. Sie enthält vorzugsweise die Hauptsicherung für die gesamte Kabinenelektrik, die Hauptsicherung für die gesamte Motorelektrik, Hochstromrelais für die Motoransaugluftvorwärmung und die Startereinzugsspule und Anschlußbolzen für eine Fremdstarteinrichtung.

Durch das erfindungsgemäße Leistungsverzweigungszentrum lassen sich alle an einen Ackerschlepper oder ein anderes landwirtschaftliches oder Nutzfahrzeug gestellten Anforderungen erfüllen:
1. Sicherheit beim Fremdstart,
2. Sicherheit der Kabinenelektrik durch Hauptsicherung,
3. Sicherheit der Motorelektrik durch Hauptsicherung,
4. Praktisch kein Spannungsabfall in der Kabinenelektrik infolge der überdimensionierten Schraubverbindung (Pluspol) an der Trennstelle zwischen Kabinenkabelbaum und Motor- bzw. Getriebekabelbaum,
5. Schutz gegen Staub und Spritzwasser durch allseits geschlossene Steckergehäuse.

Die Steckverbindung ist zur Übertragung hoher Ströme geeignet.

Weitere vorteilhafte Ausgestaltungen und Weiterbildungen der Erfindung gehen aus den Unteransprüchen hervor.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: den Kabinenkabelbaum eines Ackerschleppers mit vergrößert dargestelltem Kabinenkabelbaumstecker in perspektivischer Explosionsdarstellung,
- Fig. 2: den Motorkabelbaum eines Ackerschleppers mit vergrößert dargestelltem Motorkabelbaumstecker in perspektivischer Explosionsdarstellung,
- Fig. 3: den Getriebekabelbaum eines Ackerschleppers mit vergrößert dargestelltem Getriebekabelbaumstecker in perspektivischer Explosionsdarstellung,

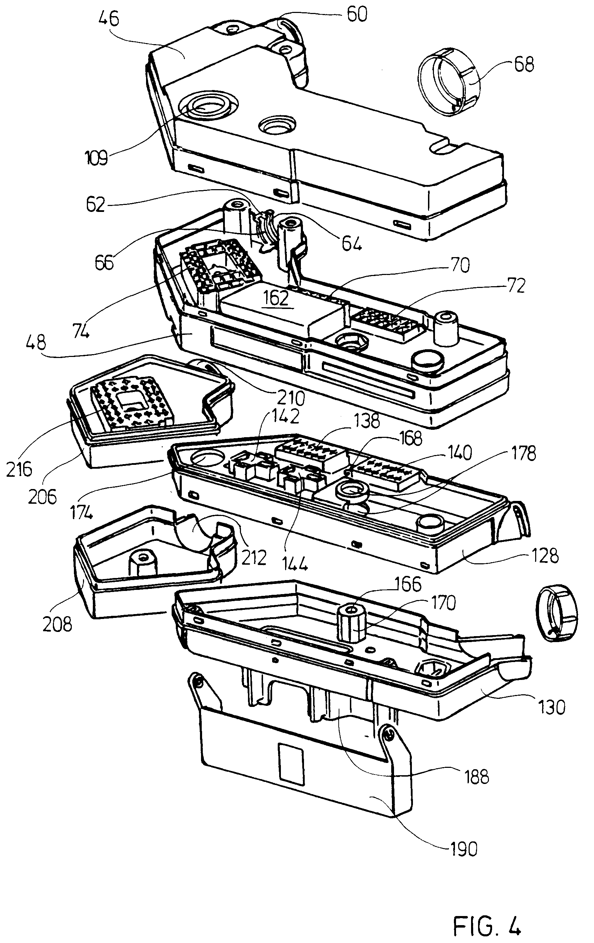

- Fig. 4: einen Kabinenkabelbaumstecker, einen Motorkabelbaumstecker und einen Getriebekabelbaumstecker in perspektivischer Explosionsdarstellung und
- Fig. 5: eine Steckverbindung mit Kabinenkabelbaumstecker, Motorkabelbaumstecker und Getriebekabelbaumstecker in seitlicher, teilweise geschnittener Darstellung.

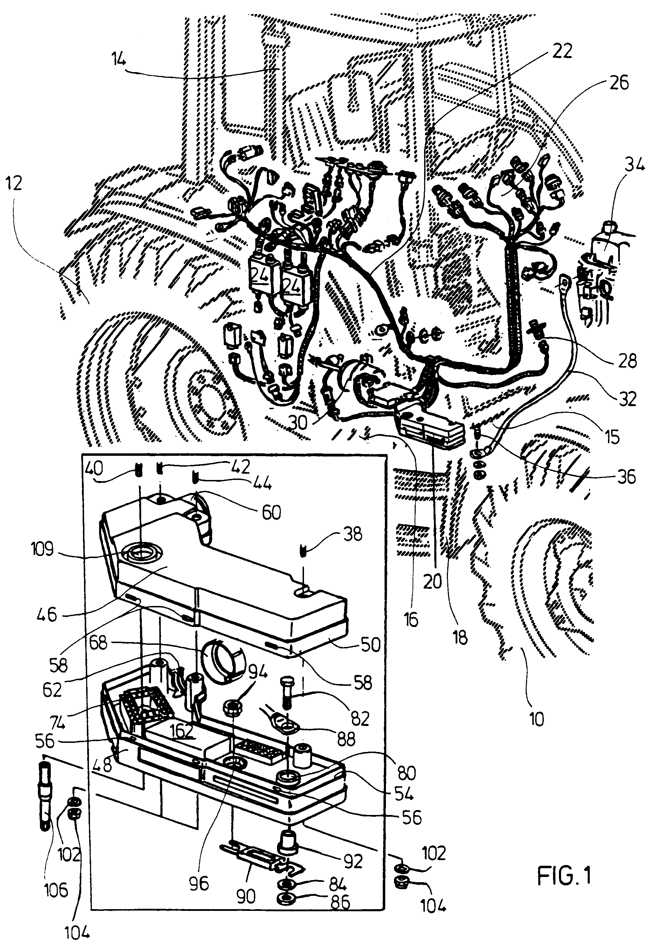

In Fig. 1 ist durch punktierte Linien der Ausschnitt eines Ackerschleppers mit Vorderrad 10, Hinterrad 12 und Fahrzeugkabine 14 dargestellt. Unterhalb des Bodenbleches 15 der Fahrzeugkabine 14 ist zwischen den seitlichen Holmen 16, 18 der rechten Trittstufe des Ackerschleppers ein Kabinenkabelbaumstecker 20 leicht zugänglich angebracht. Der Kabinenkabelbaumstecker 20 ist Endstück eines Kabinenkabelbaumes 22, durch den verschiedene Stromabnehmer, Bedien- und Anzeigeelemente in der Fahrzeugkabine 14, wie beispielsweise Sicherungs- und Relaiskästen 24, Geräte der Armaturenwand 26, Differentialsperrenschalter 28 und Hubkraftregeleinrichtung 30 elektrisch mit den Polen des Kabinenkabelbaumsteckers 20 verbunden sind. Ein Erdungskabel 32 verbindet das Bodenblech 15 der Fahrzeugkabine 14 mit dem Motorblock 34, welcher seinerseits mit dem Minuspol der nicht dargestellten Fahrzeugbatterie verbunden ist. Mit dem Bodenblech 15 der Fahrzeugkabine 14 sind nach unten vorstehende Schraubenstifte 36, 38, 40, 42, 44 verschweißt, die der Befestigung des Kabinenkabelbaumsteckers 20 und des Erdungskabels 32 dienen.

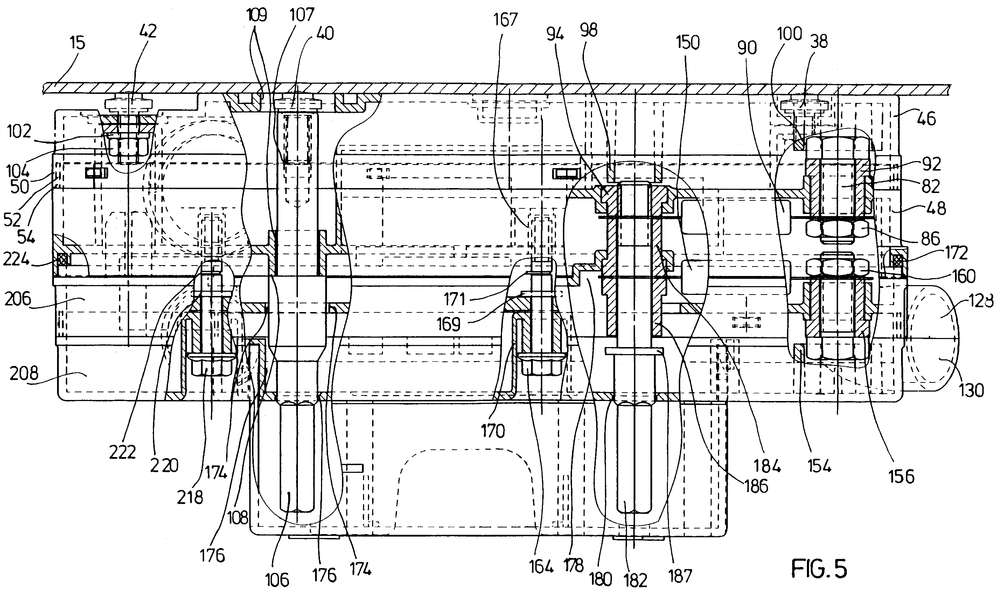

Der in dem Ausschnittbereich der Fig. 1 vergrößert dargestellte Kabinenkabelbaumstecker 20 enthält ein schalenförmig ausgebildetes flaches Oberteil 46 und ein schalenförmig ausgebildetes flaches Unterteil 48. Der umlaufende nach unten gerichtete Rand 50 des Oberteils 46 weist eine umlaufende nach unten offene Nut 52 (Fig. 5) auf, in die bei zusammengebautem Kabinenkabelbaumstecker 20 der nach oben gerichtete Rand 54 des Unterteils 48 eingreift. Der obere Rand 54 des Unterteils 48 enthält nach außen vorstehende Rastnasen, 56, die bei der Befestigung des Unterteils 48 in entsprechende Ausnehmungen 58 im Rand 50 des Oberteils 46 eingreifen. Die labyrinthartige Verbindung zwischen Oberteil 46 und Unterteil 48 verhindert das Eindringen von Spritzwasser und Schmutz in das Innere des Kabinenkabelbaumsteckers 20.

Die Kabeldurchtrittsöffnung des Kabinenkabelbaumsteckers 20 wird durch an dem Oberteil 46 und dem Unterteil 48 angeformte, miteinander korrespondierende Zylinderhalbschalen 60, 62 gebildet. Innerhalb der Zylinderhalbschalen 60, 62 befinden sich zwei umlaufende Nuten 64, 66, von denen die eine einen nicht gezeigten O-Ring zur Abdichtung des Steckergehäuses gegenüber einem durchtretenden Wellschlauch, in dem die elektrischen Leitungen des Kabelbaumes 22 verlaufen, und die andere einen nicht gezeigten Klemmring zur mechanischen Festlegung des Wellschlauches aufnimmt. Auf die zusammengefügten Zylinderhalbschalen 60, 62 läßt sich ein Bajonettring 68 aufdrehen und verrasten, der das Oberteil 46 und das Unterteil 48 zusammenhält und den Wellschlauch zwischen den Zylinderhalbschalen 60, 62 einklemmt.

Das Unterteil 48 trägt drei mehrpolige Steckereinheiten 70, 72, 74, die je mehrere Kammern zur Aufnahme von Steckhülsenkontakten enthalten. Die Kontakte sind an die freien Enden der elektrischen Leitungen des Kabinenkabelbaumes 22 angegrimmt und in die Kammern verrastend eingeschoben. Zwei Steckereinheiten 70, 72 dienen der Verbindung mit dem Motorkabelbaum 76 und enthalten zusammen 24 Steckhülsenkontakte. Die dritte Steckereinheit 74 dient der Verbindung mit dem Getriebekabelbaum 78 und enthält 40 Steckhülsenkontakte.

Der Bodenbereich des Unterteils 48 ist durch eine Ausnehmung 80 durchbrochen, durch die sich eine Schraube 82 erstreckt. Die Schraube 82 dient mit einer Unterlegscheibe 84 und einer Mutter 86 der Befestigung und elektrischen Verbindung eines innerhalb des Kabinenkabelbaumsteckers 20 angeordneten Kabelanschlusses 88 und eines Anschlusses einer auf der Außenseite des Kabinenkabelbaumsteckers 20 angeordneten Kabinenhauptsicherung 90. Der Kabelanschluß 88 steht mit den in der Fahrzeugkabine 14 angeordneten Sicherungs- und Relaiskästen 24 in Verbindung. Die Kabinenhauptsicherung 90 ist eine 125 A Keramiksicherung, die der Absicherung der gesamten Kabinenelektrik dient. Zwischen der Kabinenhauptsicherung 90 und der Unterseite des Kabinenkabelbaumsteckers 20 ist eine Distanzbuchse 92 angeordnet, durch die der erforderliche Freiraum für die Kabinenhauptsicherung 90 geschaffen wird.

Für die Montage des Kabinenkabelbaumsteckers 20 werden zunächst die Steckhülsenkontakte des Kabinenkabelbaums 22 in die Kammern der Steckereinheiten 70, 72, 74 eingeführt und der Kabelanschluß 88 und die Kabinenhauptsicherung 90 durch die Schraube 82 an dem Unterteil 48 befestigt. Der durch einen Wellschlauch umgebene Kabinenkabelbaum 22 wird zwischen den Zylinderhalbschalen 60, 62 geführt. Eine Sechskantmutter 94 wird in eine sechskantige Ausnehmung 96 in der Innenfläche des Unterteils 48 eingelegt. Nun werden das Oberteil 46 und das Unterteil 48 miteinander verrastet. Dabei deckt ein rohrförmiger Vorsprung 98 innerhalb des Oberteils 46 die Sechskantmutter 94 ab und verhindert, daß diese aus der Ausnehmung 96 herausfallen kann. Ein Innensechskant 100 im Oberteil 46 deckt den Sechskantkopf der Schraube 82 ab und verhindert, daß sich die Schraube 82 verdrehen läßt. Damit läßt sich die außen an dem Kabinenkabelbaumstecker 20 befestigte Kabinenhauptsicherung 90 lösen und austauschen, ohne daß der Kabinenkabelbaumstecker 20 geöffnet werden muß.

Zur Befestigung des Kabinenkabelbaumsteckers 20 an der Fahrzeugkabine 14 wird dieser von unten an das Bodenblech 15 herangeführt, so daß die Schraubenstifte 38, 40, 42, 44 durch entsprechende Bohrungen in dem Oberteil 46 und dem Unterteil 48 greifen. Die Befestigung erfolgt durch Verwendung von Unterlegscheiben 102 und Aufdrehen von Muttern 104 auf die Schraubenstifte 38, 42, 44. Nun wird ein Massebefestigungsbolzen 106, der an seinem einen Ende ein Innengewinde 107 und an seinem anderen Ende ein Sechskant aufweist, durch eine Ausnehmung 109 in den Kabinenkabelbaumstecker 20 gesteckt und auf den Schraubenstift 40 aufgeschraubt. Der Massebefestigungsbolzen 106 stützt sich mit seinem Bund 108 an der Unterseite des Kabinenkabelbaumsteckers 20 ab und drückt diesen gegen das Bodenblech 15 der Fahrzeugkabine 14. Der Massebefestigungsbolzen 106 erfüllt damit zwei Funktionen, er dient einerseits der Befestigung des Kabinenkabelbaumsteckers 20 und führt andererseits durch seine metallische Verbindung mit dem Bodenblech 15 das Massepotential der Fahrzeugkabine 14.

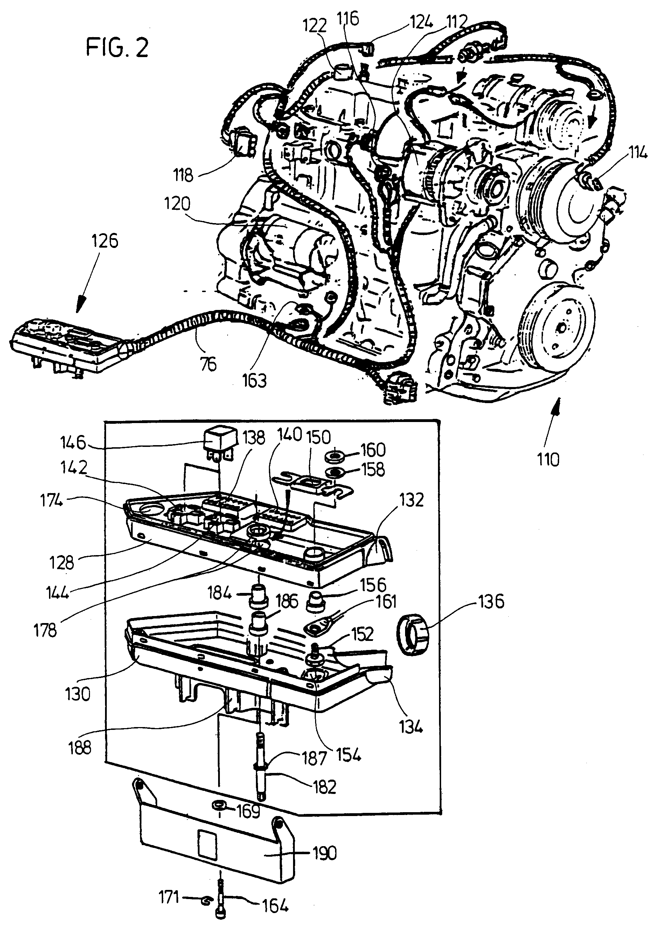

In der Fig. 2 ist der Motor 110 des Ackerschleppers angedeutet. Die Leitungen der elektrischen Ausrüstungsteile des Motors 110, wie beispielsweise die Lichtmaschine 112, der Drehzahlgeber 114, die Luftvorerwärmung 116, die Kraftstoffvorerwärmung 118, der Starter 120, der Temperaturfühler 122 und der Öldruckmesser 124 sind in einem Motorkabelbaum 76 zusammengefaßt und enden in einem Motorkabelbaumstecker 126.

Der in dem Ausschnittsbereich der Fig. 2 vergrößert dargestellte Motorkabelbaumstecker 126 ist prinzipiell ähnlich aufgebaut wie der Kabinenkabelbaumstecker 20 und enthält ebenfalls ein Oberteil 128 und ein Unterteil 130, die für einen Staub- und Spritzwasserschutz labyrinthartig ineinandergreifend und miteinander verrastbar ausgebildet sind und eine Kabelaustrittsöffnung aufweisen, die im wesentlichen aus zwei Zylinderhalbschalen 132, 134 und einem Bajonettring 136 gebildet wird. Das Oberteil 128 nimmt zwei Steckereinheiten 138, 140 auf, die räumlich mit den Steckereinheiten 70, 72 des Kabinenkabelbaumsteckers 20 korrespondieren und deren insgesamt 24 nach oben hervorstehende Steckstifte in die entsprechenden Steckhülsenkontakte der Steckereinheiten 70, 72 einsteckbar sind. Die Steckstifte der Steckereinheiten 138, 140 sind mit den elektrischen Leitungen des Motorkabelbaumes 76 verbunden.

In dem Oberteil 128 sind ferner zwei vierpolige Steckverbinder 142, 144 angeordnet, deren Kontakte auf der Steckverbinderunterseite (d. h. der Innenseite des Motorkabelbaumsteckers 126) mit Leitungen des Motorkabelbaumes 76 verbunden sind und auf deren äußere, in Fig. 2 sichtbare Seiten je ein Relais 146 aufsteckbar ist. Bei den Relais 146 handelt es sich um ein 70 A Starterrelais und ein 70 A Relais für die Ansaugluftvorerwärmungseinrichtung.

Der Motorkabelbaumstecker 126 trägt auf seiner äußeren, oberen Seite eine Motorhauptsicherung 150, die der Absicherung der gesamten Motorstartelektrik dient. Es handelt sich um eine 80 A Keramiksicherung. Die Befestigung der Motorhauptsicherung 150 am Motorkabelbaumstecker 126 erfolgt auf ähnliche Weise wie die bereits beschriebene Befestigung der Kabinenhauptsicherung 90 an dem Kabinenkabelbaumstecker 20. Für die Befestigung wird eine Schraube 152, deren Sechskantkopf durch eine sechskantige Ausnehmung 154 in der Innenwandung des Unterteils 130 gegen Verdrehungen gesichert ist, eine Distanzbuchse 156, eine Unterlegscheibe 158 und eine Mutter 160 verwendet. Neben dem Anschluß der Motorhauptsicherung 150 dient die Schraube 152 der Befestigung und elektrischen Verbindung eines innerhalb des Motorkabelbaumsteckers 126 angeordneten Kabelanschlusses 161. Der Kabelanschluß 161 steht in unmittelbarer Verbindung mit einem Anschluß 163 des Starters 120, der seinerseits mit dem Pluspol der Fahrzeugbatterie verbunden ist.

Der Zusammenbau des Motorkabelbaumsteckers 126 erfolgt auf ähnliche Weise wie der des Kabinenkabelbaumsteckers 20, indem zunächst die Steckereinheiten 138, 140 und Steckverbinder 142, 144 eingesetzt und elektrisch mit den Leitungen des Motorkabelbaums 76 verbunden werden. Der Sechskantkopf der Schraube 152 wird in die Ausnehmung 154 gelegt und die Distanzbuchse 156 wird aufgeschoben. Ferner wird der weiter unten beschriebene Pluspolbefestigungsbolzen und die beiden Distanzbuchsen 184, 186 eingesetzt. Dann erfolgt die Verrastung des Oberteils 128 und des Unterteils 130, und der Bajonettring 136 wird aufgedreht. Der Bund 187 des Pluspolbefestigungsbolzens 182 sichert diesen vor dem Herausfallen aus dem Motorkabelbaumstecker 126.

Der vormontierte Motorkabelbaumstecker 126 ist an dem Kabinenkabelbaumstecker 20 derart befestigbar, daß die Oberseite des Oberteils 128 des Motorkabelbaumsteckers 126 einen Teilbereich der Unterseite des Unterteils 48 des Kabinenkabelbaumsteckers 20 überdeckt und die Kontakte der Steckereinheiten 70 und 138 sowie 72 und 140 ineinander gesteckt sind. Um den erforderlichen Freiraum für die Relais zu bilden, enthält das Unterteil 48 des Kabinenkabelbaumsteckers 20 eine nach unten offene Kammer 162. Die Befestigung erfolgt durch eine Schraube 164, die von unten durch Durchgangsausnehmungen 166, 168 des Motorkabelbaumsteckers 126 gesteckt wird und in eine in das Oberteil 46 des Kabinenkabelbaumsteckers 20 eingespritzte Mutter 167 eingeschraubt wird. Damit hierbei keine Verformung des Unterteils 130 und des Oberteils 128 des Motorkabelbaumsteckers 126 eintritt, verläuft die Durchgangsbohrung 166 innerhalb einer an der Innenseite des Unterteils 130 angeformten Rampe 170, die sich an der Innenseite des Oberteils 128 abstützt. Die Schraube 164 ist durch eine Unterlegscheibe 169 und einen Sicherungsring 171 an dem Motorkabelbaumstecker 126 gegen Verlust gesichert. Das Zusammenspiel von Unterlegscheibe 169 und Sicherungsring 171 unterstützt auch bei der Demontage der Kabelbaumstecker das Lösen der mit relativ hohen Kontaktkräften miteinander verbundenen Steckereinheiten 70, 138; 72, 140.

Das Unterteil 48 des Kabinenkabelbaumsteckers 20 weist eine äußere umlaufende, nach unten offene Nut auf, in die ein Dichtungsring 172 einlegbar ist, der die Trennstelle zwischen dem Kabinenkabelbaumstecker 20 und dem Motorkabelbaumstecker 126 spritzwassergeschützt abdichtet. Der Motorkabelbaumstecker 126 enthält weiter Durchgangsbohrungen 174, 176, durch die sich in zusammengebautem Zustand der Massebefestigungsbolzen 106 erstreckt.

Durch weitere Durchgangsbohrungen 178, 180 in dem Motorkabelbaumstecker 126 erstreckt sich ein Pluspolbefestigungsbolzen 182, der sich in die von dem Unterteil 48 des Kabinenkabelbaumsteckers 20 gehaltene Sechskantmutter 94 einschrauben läßt. Der Distanzierung dienen zwei Distanzbuchsen 184, 186, die identisch mit den Distanzbuchsen 92, 156 ausgebildet sein können. Der Pluspolbefestigungsbolzen 182 verbindet gleichzeitig die noch freien Anschlüsse der Kabinenhauptsicherung 90 und der Motorhauptsicherung 150 miteinander. Er dient darüberhinaus mit der Schraube 164 der Befestigung des Motorkabelbaumsteckers 126 an dem Kabinenkabelbaumstecker 20.

Durch den Pluspolbefestigungsbolzen 182 wird damit der Pluspol der Fahrzeugbatterie mit dem Stromversorgungskabel der Fahrzeugkabine 14 verbunden, indem eine Verbindung zwischen der Fahrzeugbatterie, dem Anschluß 163 des Starters 120, dem Kabelanschluß 161, der Schraube 152 der Motorhauptsicherung 150, dem Pluspolbefestigungsbolzen 182, der Kabinenhauptsicherung 90, der Schraube 82 und dem Kabelanschluß 88, der mit dem Stromversorgungskabel der Fahrzeugkabine 14 verbunden ist, hergestellt wird.

Der Massebefestigungsbolzen 106 und der Pluspolbefestigungsbolzen 182 ragen nach unten aus dem Unterteil 130 des Motorkabelbaumsteckers 126 heraus und sind in dem vorstehenden Bereich als Sechskant ausgebildet. Die vorstehenden Bereiche werden seitlich durch eine Seitenwand 188 geschützt. An der Unterseite des Unterteils 130 ist eine Polschutzklappe 190 schenkbar befestigt, durch die sich die beiden Befestigungsbolzen 106, 182 von unten abdecken lassen. Die Polschutzklappe 190 ermöglicht den Zugang zu den Befestigungsbolzen 106, 182, so daß nicht dargestellte Kabel einer Fremdstarteinrichtung an die Befestigungsbolzen 106, 182 anschließbar sind.

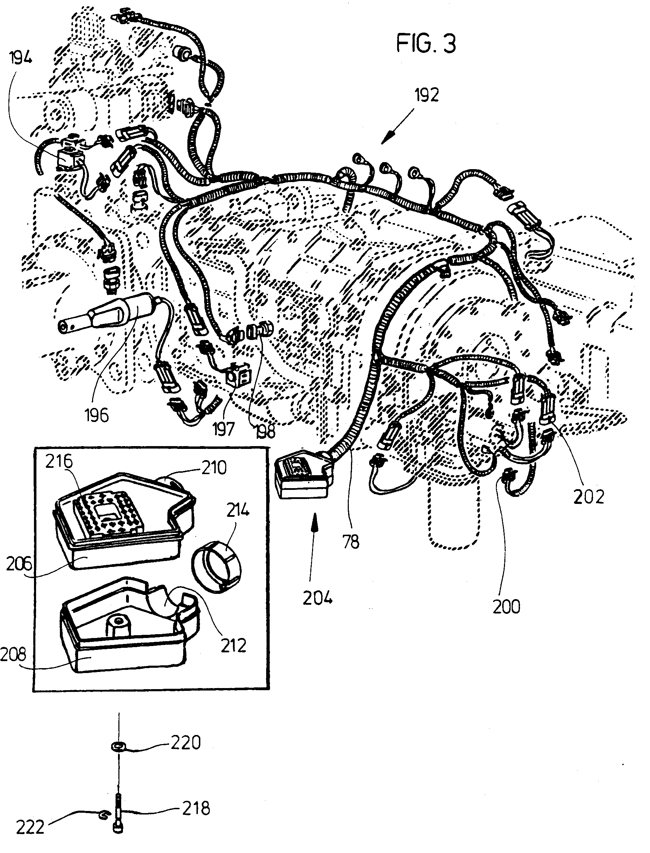

In Fig. 3 ist durch punktierte Linien das Getriebe 192 des Ackerschleppers angedeutet. Die Leitungen der elektrischen Ausrüstungsteile des Getriebes 192, wie beispielsweise das Differentialsperrventil 194, die Kraftmeßbolzen 196, das MFWD-Ventil 197, der Sicherheitsschalter 198, der Kupplungsschalter 200 und der Öldruckmesser 202 sind in einem Getriebekabelbaum 78 zusammengefaßt und enden in einem Getriebekabelbaumstecker 204.

Der in dem Ausschnittsbereich der Fig. 3 vergroßert dargestellte Getriebekabelbaumstecker 204 ist prinzipiell ähnlich aufgebaut wie der Motorkabelbaumstecker 126 und enthält ebenfalls ein Oberteil 206 und ein Unterteil 208, die für einen Staub- und Spritzwasserschutz labyrinthartig ineinandergreifend und miteinander verrastbar ausgebildet sind und eine Kabelaustrittsöffnung aufweisen, die im wesentlichen aus zwei Zylinderhalbschalen 210, 212 und einem Bajonettring 214 gebildet wird. Das Oberteil 206 nimmt eine Steckereinheit 216 auf, die räumlich mit der Steckereinheit 74 des Kabinenkabelbaumsteckers 20 korrespondiert und dessen insgesamt 40 nach oben hervorstehende Steckstifte in die entsprechenden Steckhülsenkontakte der Steckereinheit 74 einsteckbar sind. Die Steckstifte der Steckereinheit 216 sind mit den elektrischen Leitungen des Getriebekabelbaumes 78 verbunden.

Der Zusammenbau des Getriebekabelbaumsteckers 204 erfolgt auf ähnliche Weise wie der des Motorkabelbaumsteckers 126, indem zunächst die Steckereinheit 216 in das Oberteil 206 eingesetzt und elektrisch mit den Leitungen des Getriebekabelbaums 78 verbunden wird und dann eine Verrastung des Oberteils 206 und des Unterteils 208 erfolgt und der Bajonettring 214 aufgedreht wird.

Der vormontierte Getriebekabelbaumstecker 204 ist an dem Kabinenkabelbaumstecker 20 derart befestigbar, daß die Oberseite des Oberteils 206 des Getriebekabelbaumsteckers 204 den noch nicht durch den Motorkabelbaumstecker 126 beanspruchten Teilbereich der Unterseite des Unterteils 48 des Kabinenkabelbaumsteckers 20 überdeckt und die Kontakte der Steckereinheiten 74 und 216 ineinander gesteckt sind. Die Befestigung erfolgt durch eine Schraube 218 mit Unterlegscheibe 220 und Sicherungsring 222 auf gleiche Weise wie die Befestigung des Motorkabelbaumsteckers 126 durch die Schraube 164. Beide Schrauben 164, 218 können identisch ausgebildet sein. Die Schraube 218 wird in eine in das Oberteil 46 des Kabinenkabelbaumsteckers 20 eingespritzte Mutter 167 eingeschraubt. Auch die Trennstelle zwischen dem Kabinenkabelbaumstecker 20 und dem Getriebekabelbaumstecker 204 ist durch einen Dichtungsring 224 abgedichtet.

## Patentansprüche

1. Kabelbaum für ein Kraftfahrzeug mit wenigstens einem an der Fahrzeugkabine (14) befestigbaren Kabinenkabelbaumstecker (20), dessen Pole elektrisch mit Stromabnehmern, Bedien- und Anzeigegeräten in der Fahrzeugkabine (14) verbunden sind und mit wenigstens einem elektrisch mit dem Kabinenkabelbaumstecker (20) verbindbaren weiteren Kabelbaumstecker (126, 204), dessen Pole mit elektrischen Ausrüstungsteilen wenigstens einer Fahrzeugkomponente, beispielsweise Motor (110) oder Getriebe (192), verbunden sind, wobei in das Gehäuse des Kabinenkabelbaumsteckers (20) und/oder das Gehäuse des weiteren Kabelbaumsteckers (126, 204) wenigstens eine Sicherung integriert ist, dadurch gekennzeichnet, daß wenigstens eine Sicherung eine Hauptsicherung (90, 150) ist und daß in das Gehäuse des Kabinenkabelbaumsteckers (20) und/oder das Gehäuse des weiteren Kabelbaumsteckers (126, 204) eine Anschlußmöglichkeit (106, 182) für eine Fremdstarteinrichtung integriert ist.

2. Kabelbaum nach Anspruch 1, dadurch gekennzeichnet, daß in das Gehäuse des Kabinenkabelbaumsteckers (20) und/oder das Gehäuse des weiteren Kabelbaumsteckers (126, 204) wenigstens ein Hochstromrelais (146) integriert ist.

3. Kabelbaum nach Anspruch 1 oder 2, dadurch gekennzeichnet, daß in die Steckverbindung, die durch den Kabinenkabelbaumstecker (20) und den weiteren Kabelbaumstecker (126, 204) gebildet wird, wenigstens eine Anschlußeinrichtung integriert ist, die als elektrisch mit dem Fahrzeugchassis verbundener Massepol (106) oder über wenigstens eine in der Steckverbindung integrierte Sicherung (150) mit dem Pluspol der Fahrzeugbatterie in Verbindung stehender Pluspol (182) zum wahlweisen Anschluß einer Fremdstarteinrichtung ausgebildet ist.

4. Kabelbaum nach Anspruch 3, dadurch gekennzeichnet, daß der Massepol (106) und/oder der Pluspol (182) der Anschlußeinrichtung bolzenförmig ausgebildet ist.

5. Kabelbaum nach einem der Ansprüche 3 oder 4, dadurch gekennzeichnet, daß die Anschlußeinrichtung (106, 182) gleichzeitig als Befestigungselement für wenigstens einen der Kabelbaumstecker (20, 126) an dem Fahrzeugchassis oder an einem anderen Kabelbaumstecker (20) dient.

6. Kabelbaum nach einem der Ansprüche 1 bis 5, dadurch gekennzeichnet, daß mit dem Kabinenkabelbaumstecker (20) wenigstens ein Motorkabelbaumstecker (126) und ein Getriebekabelbaumstecker (204) verbindbar ist, die in zusammengebautem Zustand im wesentlichen nebeneinander in einer Ebene liegen.

7. Kabelbaum nach einem der Ansprüche 1 bis 6, dadurch gekennzeichnet, daß der Kabinenkabelbaumstecker (20) wenigstens eine Steckhülsenkontaktgruppe (70, 72) für den Anschluß der Steckhülsenkontakte (138, 140) eines Motorkabelbaumsteckers (126) und wenigstens eine Steckhülsenkontaktgruppe (74) für den Anschluß der Steckhülsenkontakte (216) eines Getriebekabelbaumsteckers (204) enthält.

8. Kabelbaum nach einem der Ansprüche 1 bis 7, dadurch gekennzeichnet, daß das Gehäuse des Kabinenkabelbaumsteckers (20) eine Hauptsicherung (90) für die Kabinenelektrik aufnimmt.

9. Kabelbaum nach einem der Ansprüche 1 bis 8, dadurch gekennzeichnet, daß das Gehäuse eines Motorkabelbaumsteckers (126) eine Hauptsicherung (150) für die Motorelektrik aufnimmt.

10. Kabelbaum nach einem der Ansprüche 1 bis 9, dadurch gekennzeichnet, daß in dem Gehäuse eines Motorkabelbaumsteckers (126) Steckkontakte vorgesehen sind, in die wenigstens ein Hochstromrelais (146) für die Motoransaugluftvorwärmung und/oder wenigstens ein Hochstromrelais (146) für die Startereinzugsspule einsteckbar ist.

11. Kabelbaum nach einem der Ansprüche 1 bis 10, dadurch gekennzeichnet, daß wenigstens ein Kabelbaumstecker (20, 126, 204) aus einem schalenförmig ausgebildeten Oberteil (46, 128, 206) und einem schalenförmig ausgebildeten Unterteil (48, 130, 208) besteht, die mit ihren einander zugewandten umlaufenden Kanten (50, 54) labyrinthartig ineinandergreifen und durch Rastmittel (56, 58) miteinander verbindbar sind.

12. Kabelbaum nach einem der Ansprüche 1 bis 11, dadurch gekennzeichnet, daß bei einem aus zwei Schalen bestehenden Kabelbaumstecker (20, 126, 204) eine Kabeldurchtrittsöffnung durch an jeder der Schalen angeformte miteinander korrespondierende Zylinderhalbschalen (60, 62; 132, 134; 210, 212) gebildet wird, innerhalb derer wenigstens eine umlaufende Nut (64, 66) vorgesehen ist, in die ein Dichtelement zum Abdichten der Kabeldurchtrittsöffnung einlegbar ist.

13. Kabelbaum nach Anspruch 12, dadurch gekennzeichnet, daß die elektrischen Leitungen des Kabelbaumes (22, 76, 78) wenigstens im Bereich der Kabeldurchtrittsöffnung durch ein Wellrohr umgeben sind und daß die Zylinderhalbschalen (60, 62; 132, 134; 210, 212) mit einer Rille, die einen dichtenden O-Ring aufnimmt, und einer umlaufenden Nase versehen sind, die zwischen zwei Wellen des Wellrohres eingreift und das Wellrohr an den Zylinderhalbschalen (60, 62; 132, 134; 210, 212) arretiert.

14. Kabelbaum nach Anspruch 12 oder 13, dadurch gekennzeichnet, daß eine Ringverschraubung (68, 136, 214) außen auf die Zylinderhalbschalen (60, 62; 132, 134; 210, 212) bajonettartig aufschraubbar ist und die beiden Zylinderhalbschalen (60, 62; 132, 134; 210, 212) zusammenhält.

15. Kabelbaum nach einem der Ansprüche 1 bis 14, dadurch gekennzeichnet, daß die Verbindung zwischen dem Kabinenkabelbaumstecker (20) und einem weiteren Kabelbaumstecker (126, 204) spritzwassergeschützt ausgeführt ist.

16. Kabelbaum nach einem der Ansprüche 1 bis 15, dadurch gekennzeichnet, daß an einem Motorkabelbaumstecker (126) eine schwenkbare Klappe (190) befestigt ist, die der schützenden Abdeckung eines über den Motorkabelbaumstecker (126) hervorstehenden Teils der Anschlußvorrichtung (106, 182) dient.

## Claims

1. A wiring harness for a vehicle, with at least one cab wiring harness connector (20), which can be fixed to the vehicle cab (14) and whose poles are connected electrically to current loads, operating and indicator devices in the vehicle cab (14), and with at least one further wiring harness connector (126, 204) which can be connected electrically to the cab wiring harness connector (20) and whose poles are connected to electrical equipment of at least one vehicle component, for example, the engine (110) or transmission (192), wherein at least one fuse is integrated into the housing of the cab wiring harness connector (20) and/or the housing of the further wiring harness connector (126, 204), characterized in that at least one fuse is a main fuse (90, 150) and in that a means of connection (106, 182) for an external starting device is integrated into the housing of the cab wiring harness connector (20) and/or the housing of the further wiring harness connector (126, 204).

2. A wiring harness according to claim 1, characterized in that at least one high current relay (146) is integrated into the housing of the cab wiring harness connector (20) and/or the housing of the further wiring harness connector (126, 204).

3. A wiring harness according to claim 1 or 2, characterized in that at least one connector device is integrated into the plug-in connection which is formed by the cab wiring harness connector (20) and the further wiring harness connector (126, 204) and is formed as an earth pole (106) connected electrically to the vehicle chassis or through at least one fuse (150) integrated into the plug-in connector to the positive pole (182) connected to the positive pole of the vehicle battery, for selective connection of an external starting device.

4. A wiring harness according to claim 3, characterized in that the earth pole (106) and/or the positive pole (182) of the connector device is in the form of a bolt.

5. A wiring harness according to claim 3 or 4, characterized in that the connector device (106, 204) serves at the same time as an attachment element for at least one of the wiring harness connectors (20, 126) to the vehicle chassis or to another wiring harness connector (20).

6. A wiring harness according to any of claims 1 to 5, characterized in that at least one engine wiring harness connector (126) and a transmission wiring harness connector (204) can be connected to the cab wiring harness connector (20) and in the assembled state lie substantially beside each other in one plane.

7. A wiring harness according to any of claims 1 to 6, characterized in that the cab wiring harness connector (20) includes at least one group (70, 72) of sleeve contacts for connection of the sleeve contacts (138, 140) of an engine wiring harness connector (126) and at least one group (74) of sleeve contacts for connection of the sleeve contacts (216) of a transmission wiring harness connector (204).

8. A wiring harness according to any of claims 1 to 7, characterized in that the housing of the cab wiring harness connector (20) receives a main fuse (90) for the cab electral system.

9. A wiring harness according to any of claims 1 to 8, characterized in that the housing of an engine wiring harness connector (126) receives a main fuse (150) for the engine electrical system.

10. A wiring harness according to any of claims 1 to 9, characterized in that plug-in contacts are provided in the housing of an engine wiring harness connector (126), into which can be plugged at least one high current relay (146) for the engine induction air pre-heater and/or at least one high current relay (146) for the starter pull-in coil.

11. A wiring harness according to any of claims 1 to 10, characterized in that at least one wiring harness connector (20, 126, 204) is formed from a shell-like upper part (46, 128, 206) and a shell-like lower part (48, 130, 208), which can be connected together by detent means (56, 58), with their facing edges (50, 54) interengaging in the manner of a labyrinth.

12. A wiring harness according to any of claims 1 to 11, characterized in that a cable passage opening is formed in a wiring harness connector (20, 136, 204) consisting of two shells by corresponding cylindrical half shells (60, 62; 132, 134; 210, 212) which are formed on each of the shells and within which at least one circumferential groove (64, 66) is provided, into which a sealing element for sealing the cable passage opening can be fitted.

13. A wiring harness according to claim 12, characterized in that the electrical conductors of the wiring harness (22, 76, 78) are surrounded at least in the region of the cable passage opening by a corrugated tube and in that the cylindrical half shells (60, 62; 132, 134; 210, 212) are provided with a groove, which receives a sealing O-ring, and with a circumferential nose which engages between two corrugations of the corrugated tube and arrests the corrugated tube on the cylindrical half shells (60, 62; 132, 134; 210, 212).

14. A wiring harness according to claim 12 or 13, characterized in that a threaded ring (68, 136, 214) can be screwed like a bayonet ring on to the outside of the cylindrical half shells (60, 62; 132, 134; 210, 212) and holds together the two cylindrical half shells (60, 62; 132, 134; 210, 212).

15. A wiring harness according to any of claims 1 to 14, characterized in that the connection between the cab wiring harness connector (20) and a further wiring harness connector (136, 204) is made tight against spray water.

16. A wiring harness according to any of claims 1 to 15, characterized in that a hinged flap (190) is fixed on to an engine wiring harness connector (126) and serves as a protective cover for a part of the connector device (106, 182) projecting beyond the engine wiring harness connector (126).

## Revendications

1. Faisceau de câbles pour un véhicule automobile, comportant au moins un connecteur (20) du faisceau de câbles de la cabine, pouvant être fixé à la cabine (14) du véhicule et dont les pôles sont reliés électriquement à des récepteurs de courant, des appareils de commande et des appareils d'affichage dans la cabine (14) du véhicule, et comportant au moins un autre connecteur (126,204) du faisceau de câbles, pouvant être relié électriquement au connecteur (20) du faisceau de câbles de la cabine et dont les pôles sont reliés à des éléments d'équipement électriques de composants du véhicule, par exemple le moteur (110) ou la transmission (192), au moins un fusible étant intégré dans le boîtier du connecteur (20) du faisceau de câbles de la cabine et/ou dans le boîtier de l'autre connecteur (126, 204) du faisceau de câbles, caractérisé en ce qu'au moins un fusible est un fusible principal (90,150) et qu'une possibilité de raccordement (106, 182) pour un dispositif de démarrage indépendant est intégrée dans le boitier du connecteur (20) du faisceau de câbles de la cabine et/ou dans le boîtier de l'autre connecteur (126, 204) du faisceau de câbles.

2. Faisceau de câbles selon la revendication 1, caractérisé en ce qu'au moins un relais pour courant fort (146) est intégré dans le boîtier du connecteur (20) du faisceau de câbles de la cabine et/ou dans le boîtier de l'autre connecteur (126, 204) du faisceau de câbles.

3. Faisceau de câbles selon la revendication 1 ou 2, caractérisé en ce que dans la liaison enfichée, qui est formée par le connecteur (20) du faisceau de câbles de la cabine et par l'autre connecteur (126,204) du faisceau de câbles, est intégré au moins un dispositif de raccordement, qui est agencé sous la forme d'un pôle de masse (106) relié électriquement au châssis du véhicule ou sous la forme d'un pôle positif (182) relié par l'intermédiaire d'au moins un fusible (105) intégré dans la liaison à enfichage, au pôle positif de la batterie du véhicule, pour le raccordement au choix d'un dispositif de démarrage indépendant.

4. Faisceau de câbles selon la revendication 3, caractérisé en ce que le pôle de masse (106) et/ou le pôle positif (182) du dispositif de raccordement sont agencés sous la forme de goujons.

5. Faisceau de câbles selon l'une des revendications 3 ou 4, caractérisé en ce que le dispositif de raccordement (106,182) est utilisé simultanément en tant qu'élément de fixation pour au moins l'un des connecteurs (20,126) du faisceau de câbles sur le châssis du véhicule ou sur un autre connecteur (20) du faisceau de câbles.

6. Faisceau de câbles selon l'une des revendications 1 à 5, caractérisé en ce qu'au connecteur (20) du faisceau de câbles de la cabine peuvent être reliés au moins un connecteur (126) du faisceau de câbles du moteur et un connecteur (204) du faisceau de câble de la transmission, qui, à l'état assemblé, sont situés essentiellement côte-à-côte dans un plan.

7. Faisceau de câbles selon l'une des revendications 1 à 6, caractérisé en ce que le connecteur (20) du faisceau de câbles de la cabine contient au moins un groupe (70,72) de contacts à douilles enfichables pour le raccordement des contacts à douilles enfichables (138, 140) d'un connecteur (126) du faisceau de câbles du moteur et au moins un groupe de contacts enfichables (74) pour le raccordement des contacts à douilles enfichables (216) d'un connecteur (204) du faisceau de câbles de la transmission.

8. Faisceau de câbles selon l'une des revendications 1 à 7, caractérisé en ce que le boitier du connecteur (20) du faisceau de câbles de la cabine loge un fusible principal (90) pour le système électrique de la cabine.

9. Faisceau de câbles selon l'une des revendications 1 à 8, caractérisé en ce que le boîtier d'un connecteur (126) du faisceau de câbles du moteur reçoit un fusible principal (150) pour le système électrique du moteur.

10. Faisceau de câbles selon l'une des revendications 1 à 9, caractérisé en ce que dans le boîtier d'un connecteur (126) du faisceau de câbles du moteur sont prévus des contacts à enfichage, dans lesquels peuvent être enfichés au moins un relais pour courant fort (146) pour le préchauffage de l'air d'aspiration du moteur et/ou au moins un relais pour courant fort (146) pour la bobine d'activation du démarreur.

11. Faisceau de câbles selon l'une des revendications 1 à 10, caractérisé en ce qu'au moins un connecteur (20,126,204) du faisceau de câbles est constitué par une partie supérieure (46,128,206) réalisée en forme de coque et une partie inférieure (48,130,208) réalisée en forme de coque, ces parties s'engageant l'une dans l'autre selon un système du type à labyrinthe, par leurs bords circonférentiels (50,54), qui se font face, et pouvant être reliées entre elles par des moyens d'encliquetage (56,58).

12. Faisceau de câbles selon l'une des revendications 1 à 11, caractérisé en ce que dans le cas d'un connecteur (20,126,204) du faisceau de câbles constitué par deux coques, une ouverture de passage des câbles est formée par des coques semi-cylindriques (60,62;132,134; 210,212) formées sur chacune des coques et qui se correspondent réciproquement et à l'intérieur desquelles est prévue au moins une rainure circonférentielle (64,66) dans laquelle peut être inséré un élément d'étanchéité servant à étanchéifier l'ouverture de passage des câbles.

13. Faisceau de câbles selon la revendication 12, caractérisé en ce que les conducteurs électriques du faisceau de câbles (22,76,78) sont entourés, au moins dans la zone de l'ouverture de passage des câbles, par un tube ondulé et que les coques semi-cylindriques (60,62;132,134; 210,212) comportent une rainure, qui loge un joint torique d'étanchéité, et un bec circonférentiel qui s'engage entre deux ondulations du tube ondulé et bloque le tube ondulé sur les coques semi-cylindriques (60,62;132,134;210,212).

14. Faisceau de câbles selon la revendication 12 ou 13, caractérisé en ce qu'un système de vissage annulaire (68,136,214) peut être vissé extérieurement, selon un système à baïonnette, sur les coques semi-cylindriques (60, 62;132,134;210,212), et maintient assemblées les deux coques semi-cylindriques (60,62;132,134;210,212).

15. Faisceau de câbles selon l'une des revendications 1 à 14, caractérisé en ce que la liaison entre le connecteur (20) du faisceau de câbles de la cabine et un autre connecteur (126,204) du faisceau de câbles est réalisé de manière à être protégé contre les projections d'eau.

16. Faisceau de câbles selon l'une des revendications 1 à 15, caractérisé en ce que sur un connecteur (126) du faisceau de câbles du moteur est fixé un volet pivotant (190), qui sert à recouvrir, afin de la protéger, une partie du dispositif de raccordement (106, 182), qui fait saillie au-delà du connecteur (126) du faisceau de câbles du moteur.
